# EUROPEAN PATENT APPLICATION

(11) **EP 2 045 498 A1**
(43) Date of publication of application: **08.04.2009**
(21) Application number: 08445030.3
(22) Date of filing: 02.10.2008
(51) Int. Cl.: F16L 3/22

(54) **Pipe bracket**

(30) Priority: 02.10.2007 SE 0702206
(71) Applicant: Castro, Carlo, 261 62 Gumslöv (SE)
(72) Inventor: Kjellman, Johan, 252 21 Helsingborg (SE); Hertzman, Daniel, 212 28 Malmö (SE); Jönsson, Linus, 230 40 Bara (SE); Arvidsson, Hampus, 215 66 Malmö (SE); Busetto, Filip, 212 36 Malmö (SE); Larsson, Sebastian, 212 35 Malmö (SE); Hallberg/Falk, Magnus, 216 16 Limhamn (SE); Hovold, Martin, 218 51 Klagshamn (SE); Hellström, Joachim, 212 32 Malmö (SE); Lövberg, Robin, 212 40 Malmö (SE); Sekiraca, Amir, 216 25 Malmö (SE); Sangin, Assad, 238 40 Oxie (SE); Lindahl, Ola, 215 62 Malmö (SE); Petkovic, Aleksandar, 215 79 Malmö (SE); Castro, Carlo, 261 62 Glumslöv (SE)
(74) Representative: Berglund, Erik Wilhelm

(57) **Abstract**

A console (1) comprising one or several long nuts (3) or sockets with through threads directed perpendicularly to the console (1). Threaded bars (5) that support pipe holders (11) can be threaded from above as well from below into the long nuts or sockets. The long nuts or sockets can also serve to join by means of threaded bars (16) identical or similar consoles above each other in several levels for larger pipe systems. The threaded bars are locked with nuts (9). The console (1) can further comprise holes (16) for fastening to a roof (17).

## Description

This invention concerns a bracket or console including a plate provided with holes for the fastening of the plate against a supporting substructure and means for fastening and fixing of for instance heat carrying pipes.

At placing and fixing of pipes, such as heat pipes etc. different types of console arrangements are used. These console arrangements normally comprise roof bracket, angle bracket, blade screw etc. in combination with different types of pipe holders, clamps, threaded bars, pendulum ears and screw and nut. When mounting pipes via for instance roof brackets the length of the roof bracket is normally first adapted. Further the length of the threaded bar is adapted and locked fast in the roof bracket by means of nut and counter nut. Finally the pipe bracket is mounted in the free end of the threaded bar. Thereafter the roof bracket is screwed fast against a supporting substrate and pipes are installed and fixed hanging in the pipe bracket.

On existing console arrangements adaptation and fitting is manual. This is a time requiring step, while the installing of the pipes require a comparatively short time. Characterizing for these consol arrangements is a specific given c/c measure between fixed tubes and a specific measure between console substrate and pipe. This in order to secure that existing pipe insulation with a good margin can be accommodated between the pipes and between the pipes and for instance the roof respectively.

It is therefore an object of the invention to create a device that is simple and require short time to mount against supporting substrate independent of direction and purpose for which the pipes are to be installed.

This is achieved by means of a plate provided with holes for fastening the plate against a supporting substrate and fastening means including a thread with which thread fixing means for pipes of initially defined type can be connected where one or several fastening means are arranged on the plate to fix and support connected fixing means by which pipes can suspended and fixed.

The invention is below to be described in more detail by means of an embodiment shown in the enclosed drawings, where fig 1 depicts a console in a perspective view and fig 2 a view of the opposite side, fig 3 depicts the console with threaded bar and pipe holder. Fig 4 a variety of the console and fig 5 shows a combination of the invention.

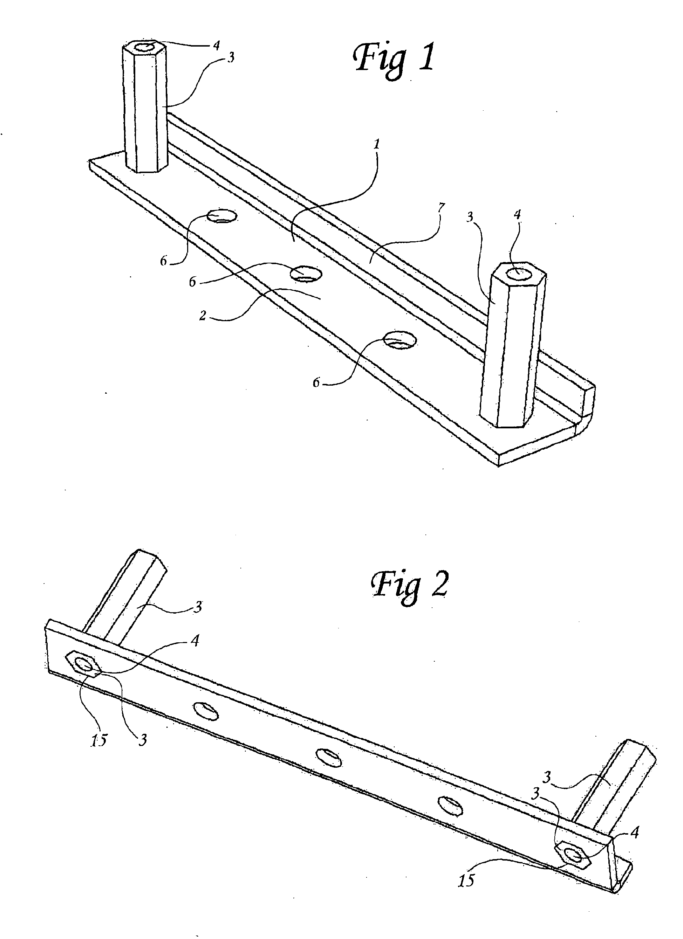

In fig 1 a console 1 is depicted comprising a plate 2 in a view seen in perspective. The plate 2 is in the shown embodiment from an elongate metal panel where the length is fundamental crucial to secure a specific c/c measure. In each end of the plate 2 fastening means 3 are arranged in the shape of long nuts or sockets 3. Each long nut 3 has an internal thread 4 for the threading there in of a threaded bar 5 provided with a corresponding external thread. Usual existing dimensions of the threaded bar are in the real case M8 or M10, but also other dimensions may be used. Also the length of the long nuts or sockets 3 are important to enable essential adjustment of the protruding length of the threaded bar 5 from the console 1 at the adaptation of pipe holder 11, in relation to the next console and/or in relation to a wall bushing, were a pipe 10 is to be drawn up to or through centred with the hole of the wall bushing. For fastening of the console 1 against a supporting substrate the plate 2 is provided with through holes 6 allowing the console 1 to be bolted fast against a supporting substrate. The plate 2 is also angled 7 for reinforcement.

In fig 2 the shape adapted through holes in which holes 15 of the console are shown, in which the long nut 3 being fixed and fastened in the plate 2. Since the thread of the long nut is easily accessible in each end this provides a combination possibility and flexibility at work with pipe support via the invented console.

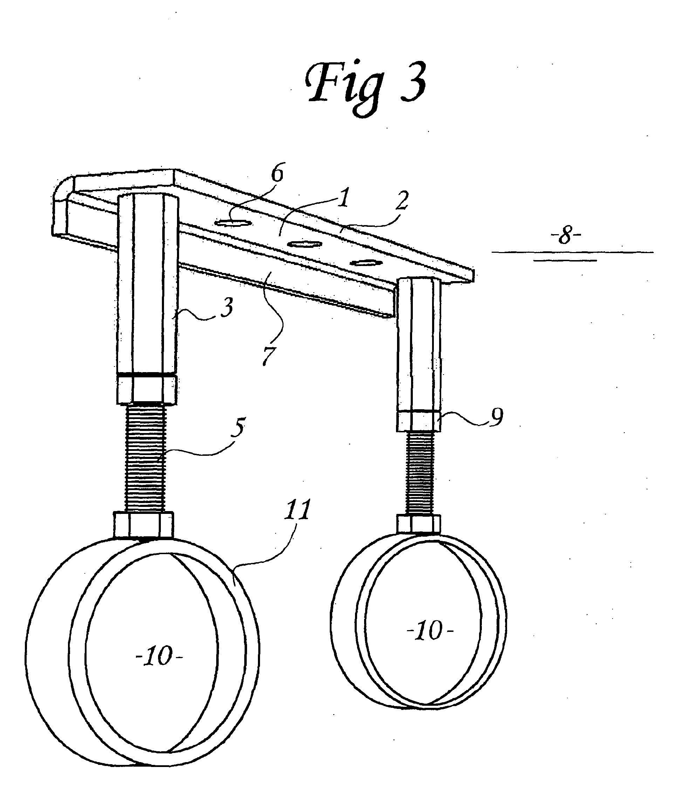

In fig 3 the long nuts 3 of the console are shown with a threaded bar 5 threaded therein at which a counter nut 9 locks the threaded bar 5 against continued movement in the long nut 3. In the other end of the threaded bar pipe holders 11 are threaded fast. For the threaded bar the length is adapted according to the particular case and/or according to given prescriptions.

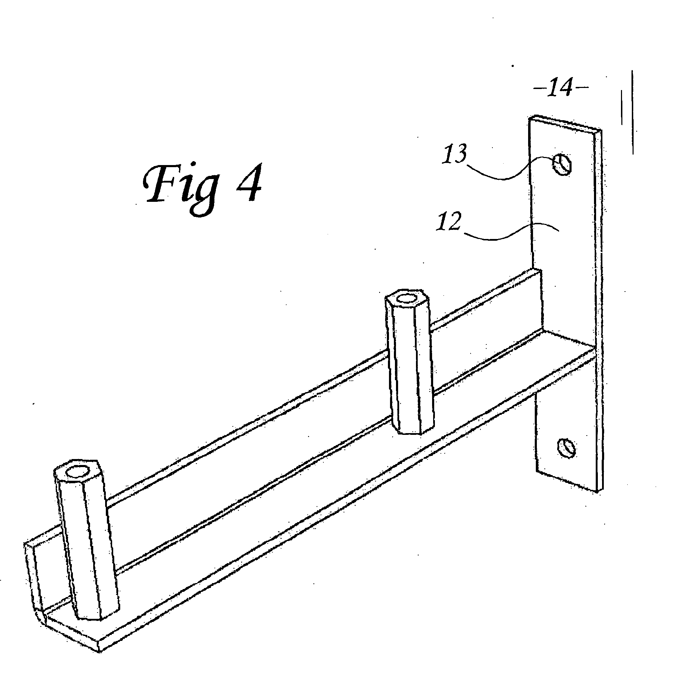

In fig 4 a variety of the invention is shown. In the shown cases the console 1 comprises an in relation to the plate 2, perpendicular or crosswise angled brace 12. The brace 12 is provided with two through holes 13 for fastening against a supporting substrate 14.

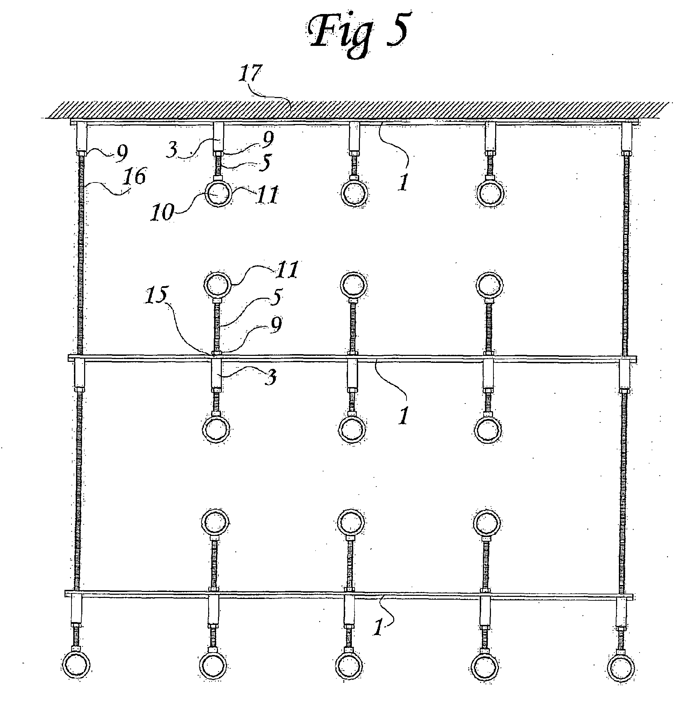

In fig 5 is shown the combination possibility of the console where several consoles have been linked together by means of a threaded bar 16. At the remaining long nuts pipes 10 can be fixed in each end thereof. The consol arrangement is further fastened to a roof. The shown arrangement can either be put together in advance more or less as a unit or alternatively be put together in situ according to what is most practical or comfortable.

As is apparent from the above the console is simple to fabricate and provide a considerable faster, more stable and exact mounting of pipes. Advantageously the consol may be made of metal but also plastic may be used or a combination of these.

## Claims

1. Console for suspension and fixing of pipes, **characterized in that** it comprise a plate (2) arranged with one or several holes (6) for fastening against a supporting substrate (8) and a fastening means (3) including an internal thread (4) in which thread fixing means (5, 11) can be connected, and that one or several fastening means are arranged on the plate to fix and provide support for connecting fixing means (5, 11) so that pipes (10) can be fixed via said fixing means (5, 11) and that the fastening means (3) permit the protruding length of the fixing means (5) from the control plate (2) to be adjusted essentially via the thread (4) for adaptation of the distance of the fixing means (5, 11) in relation to a supporting substrate (8) at which pipes (19) can be hung up and fixed via the fixing means (5).

2. Console for suspension and fixing of pipes according to claim 1, **characterized in that** a consol (1) comprise an in relation to the plate (2) perpendicular or crosswise angle d brace (12) and that the brace is provided with at least two through holes (13) for fastening, by means for instance screw against a supporting substrate.

3. Console for suspension and fixing of pipes according to claim 1 or 2, **characterized in that** the console (1) is made of metal or plastic or a combination of these.

4. Console for suspension and fixing of pipes according to any of the preceding claims, **characterized in that** the distance between the fastening means is adapted so that the pipes (10) including pipe insulation can be accommodate according to building norms.

5. Console for suspension and fixing of pipes at mounting method according to any of the preceding claims, **characterized in that** in the long nuts or sockets (3) of the console threaded bar (5) is threaded at which a counter nut (9) lock the threaded bar (5) against continued movement in the long nut (3).

6. Console for suspension and fixing of pipes, **characterized in that** it comprise one or several perpendicular to the console (1) directed at this fastened long nuts (3) or sockets with through threads, so that from above as well as from below into the long nuts threaded bars (5) can be threaded that support pipe holders (11) or one or several further consoles.
